# EUROPÄISCHE PATENTSCHRIFT

(11) **EP 3 307 415 B1**
(45) Veröffentlichungstag und Bekanntmachung des Hinweises auf die Patenterteilung: **25.08.2021**
(21) Anmeldenummer: 16718603.0
(22) Anmeldetag: 19.04.2016
(51) Int. Cl.: B01D 35/027, B01D 35/147, B01D 29/23

(54) **FILTERVORRICHTUNG**
FILTER DEVICE
DISPOSITIF DE FILTRAGE

(30) Priorität: 09.06.2015 DE 102015007691
(43) Veröffentlichungstag der Anmeldung: 18.04.2018
(73) Patentinhaber: RT-Filtertechnik Gmbh, 88048 Friedrichshafen (DE)
(72) Erfinder: BAUTZ, Marco, 88045 Friedrichshafen (DE); STEHLE, Gerhard, 78467 Konstanz (DE)
(74) Vertreter: Bartels und Partner, Patentanwälte
(86) Internationale Anmeldenummer: PCT/EP2016/000631
(87) Internationale Veröffentlichungsnummer: WO 2016/198136

(56) Entgegenhaltungen:
- EP-A1- 2 377 591
- WO-A1-2005/007267
- WO-A2-2014/165606

## Beschreibung

Die Erfindung betrifft eine Filtervorrichtung mit den Merkmalen im Oberbegriff von Anspruch 1.

Eine Filtervorrichtung dieser Gattung ist aus dem Dokument EP 0874 675 B1 bekannt. Zur Erzeugung der auf die Dichteinrichtung wirkenden Kraft weist bei dieser bekannten Filtervorrichtung die Festlegeeinrichtung eine Zugstange auf, die koaxial zur Vorrichtungslängsachse Filterteil und Stützteil vom offenen Ende des Filterelements her vollständig durchgreift, wobei an dem die zugeordnete Endkappe durchgreifenden freien Ende der Zugstange ein erster Energiespeicher vorgesehen ist, der das Stützteil gegen ein Kragenteil der Festlegeeinrichtung heranzieht, das seinerseits mittels eines zweiten Energiespeichers am Außengehäuse der Vorrichtung festgelegt ist. Die Betriebssicherheit dieser Vorrichtung lässt aus mehreren Gründen zu wünschen übrig. Zum einen ist die Übertragung der Federkraft des ersten Energiespeichers auf die Endfläche der Endkappe selbst bei metallischer Ausbildung wegen der bei erhöhter Dichtkraft gegebenen Verformungsgefahr kritisch. Zum anderen ist die Abdichtung der Durchtrittsstelle der Zugstange schwierig. Des Weiteren besteht durch Schrägzug der langen Zugstange die Gefahr des Verkantens des gesamten Stützteils mit entsprechend ungleichmäßiger Kraftübertragung auf das Kragenteil der Festlegeeinrichtung mit entsprechend beeinträchtigter Abdichtung.

Die WO 2014/165606 A2 beschreibt eine Filtervorrichtung, mit einem Stützteil und einem darin aufnehmbaren Filterteil, mit mindestens einer zwischen Stütz- und Filterteil wirkenden Dichteinrichtung sowie mit einer Festlegeeinrichtung zum wiederlösbaren Verbinden von Stütz- mit Filterteil, die ein umlaufendes Kragenteil aufweist und die unter der Wirkung mindestens eines Energiespeichers auf die Dichteinrichtung eine Kraft ausübt, die Stütz- und Filterteil fluiddicht gegeneinander abdichtet, wobei das Stützteil mit einem Dichtsystem versehen ist und zumindest an seinem der Festlegeeinrichtung zugewandten Endbereich ein weiteres umlaufendes Kragenteil aufweist.

Die WO 2005/007267 A1 offenbart weitere Filtervorrichtungen.

Ausgehend von diesem Stand der Technik stellt sich die Erfindung die Aufgabe, eine Filtervorrichtung der eingangs genannten Gattung zur Verfügung zu stellen, die sich durch ein verbessertes Betriebsverhalten, insbesondere hinsichtlich einer verbesserten Abdichtung, auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das Kragenteil der Festlegeeinrichtung konzentrisch innerhalb des Kragenteils des Stützteils geführt ist. Dadurch, dass dergestalt für das die Dichtkraft unmittelbar übertragende Bauelement eine axiale Führung gebildet ist, ist eine optimale Übertragung der in Axialrichtung wirkenden Kraft auf das Filterteil gewährleistet, so dass wiederum eine optimale Abdichtung sichergestellt ist.

Mit Vorteil kann die Anordnung so getroffen sein, dass in dem filternden Betriebszustand der Vorrichtung der Energiespeicher das Kragenteil der Festlegeeinrichtung mit vorgebbarer Dichtkraft gegen ein Dichtelement der benachbart angeordneten einen Endkappe des Filterteils anlegt. Dadurch erübrigt sich ein zweiter Energiespeicher, wie er bei der erwähnten bekannten Lösung zur Festlegung des Kragenteils der Festlegeeinrichtung am Vorrichtungsgehäuse erforderlich ist.

Bei besonders vorteilhaften Ausführungsbeispielen bewegt die den Kragenteilen zugeordnete eine Endkappe über das Filtermedium die weitere Endkappe des Filterteils unter der Wirkung des Energiespeichers gegen die zwischen Stütz- und Filterteil wirkende Dichteinrichtung bei Erhöhung der Dichtkraftwirkung. Dadurch kommt die vom einzigen vorhandenen Energiespeicher erzeugte Kraft an beiden Endkappen als Dichtkraft zur Wirkung.

Dabei kann die Anordnung mit Vorteil weiterhin so getroffen sein, dass über die Dichteinrichtung zwischen Filter- und Stützteil die Wirkung des Energiespeichers der Festlegeeinrichtung auf das Kragenteil des Stützteils übertragen ist, das sich zumindest mit Teilen seines Dichtsystems bei erhöhter Dichtkraftwirkung an Gehäuseteilen eines Aufnahmegehäuses für das Stütz- und das Filterteil nebst der Festlegeeinrichtung anlegt. Durch die Kraft des Energiespeichers sind dadurch nicht nur Stütz- und Filterteil unter abdichtender Anlagekraft gehalten, sondern mittels des Energiespeichers ist auch der aus diesen Teilen gebildete Gesamtverbund im betreffenden Vorrichtungsgehäuse festgelegt.

Bei besonders vorteilhaften Ausführungsbeispielen ist die zwischen Stütz- und Filterteil wirkende Dichteinrichtung an der weiteren Endkappe des Filterteils angeordnet, insbesondere angespritzt, und drückt diese Dichteinrichtung auf eine benachbart angeordnete Endkappe des Stützteils unter der Wirkung des Energiespeichers der Festlegeeinrichtung.

Mit besonderem Vorteil kann die Anordnung so getroffen sein, dass das Kragenteil des Stützteils gestuft ausgebildet ist und dass an einer Stufe dieses Kragenteils das umgelegte, insbesondere umgebördelte Ende eines perforierten Stützrohres des Stützteils anliegt. Auf einfache Weise ist dadurch ein Formschluss gebildet, durch den das Kragenteil durch Abheben vom Stützteil gesichert ist.

Mit besonderem Vorteil kann das Kragenteil des Stützteils innenumfangsseitig mit einer weiteren Dichteinrichtung als Teil des Dichtsystems versehen sein, an die sich das entsprechend zu dem Kragenteil des Stützteils gestufte Kragenteil der Festlegeeinrichtung in abdichtender Weise anlegt.

In besonders vorteilhafter Weise kann die Geometrie im Bereich der gestuften Flächenabschnitte der beiden Kragenteile so bemessen sein, dass beim filtrierenden Betriebszustand der Vorrichtung und bei abdichtender Wirkung aller Dichteinrichtungen, in axialer Richtung parallel zur Längsachse der Filtervorrichtung gesehen, es im Wesentlichen zu einer nahezu kräftefreien Anlage zwischen den jeweils korrespondierend gestuften Innenwandflächen der beiden konzentrisch ineinander geführten Kragenteile kommt. Dadurch steht für die Übertragung der vom Energiespeicher gelieferten, am Kragenteil der Festlegeeinrichtung wirkenden Dichtkraft auf die jeweils nachgeordneten Dichteinrichtungen für die Abdichtungen zwischen Festlegeteil, Filterteil und Stützteil ein Spielraumbereich für eine relative Axialbewegung zwischen den Kragenteilen zur Verfügung.

Bei besonders vorteilhaften Ausführungsbeispielen weist das Kragenteil der Festlegeeinrichtung über seinen oberen Rand vorspringende und nach außen weisende Rastriegel auf, die bei Verdrehung der Festlegeeinrichtung gegenüber dem Stützteil in seitlichen Eingriff mit zuordenbaren Rasthaken des anderen Kragenteils bringbar sind, wobei deren axiale Ausdehnung derart bemessen ist, dass die in Eingriff mit den Rasthaken befindlichen Rastriegel anlagefrei geführt sind. Bei derart ausgebildeter, aus den Rastriegeln und Rasthaken bestehender Rasteinrichtung steht auch beim Eingriffszustand von Rastriegeln und Rasthaken ein für die Kraftübertragung auf das Dichtsystem erforderlicher axialer Spielraum zur Verfügung.

Bei besonders vorteilhaften Ausführungsbeispielen weist das Kragenteil des Stützteils zumindest teilweise benachbart zu der freien Öffnung der Rasthaken einen Steuernocken auf, der mit einem rampenartigen Anstieg versehen das Außereingriffbringen von Filterteil und Stützteil erleichtert. Hierfür können die einem jeweiligen Rastriegel zugeordneten Nockenrampen derart angeordnet und geformt sein, dass den Rastriegeln bei Verdrehen der Festlegeeinrichtung eine axiale Bewegungskomponente vermittelt wird, durch die die beiden Kragenteile in Axialrichtung auseinanderbewegt werden.

Gemäß dem Patentanspruch 11 ist Gegenstand der Erfindung auch eine Tankvorrichtung mit einem rohrförmigen Gehäuseteil, in das eine Filtervorrichtung gemäß der Merkmalsausgestaltung nach einem der Ansprüche 1 bis 10 über eine Gehäuseöffnung einsetzbar ist.

Nachstehend ist die Erfindung anhand eines in der Zeichnung dargestellten Ausführungsbeispiels im Einzelnen erläutert. Es zeigen:

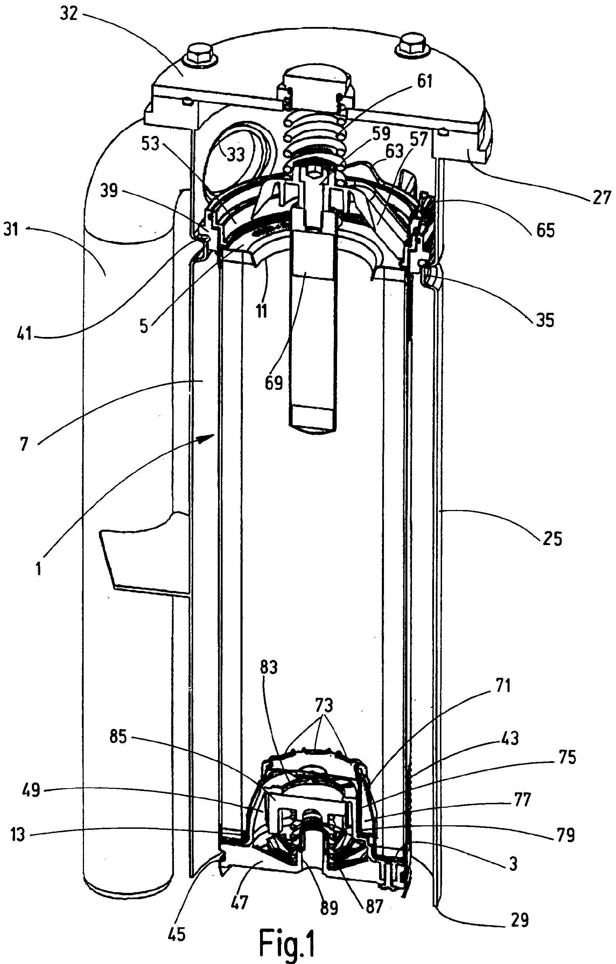

- Fig. 1: eine in perspektivischer Schrägansicht und längs aufgeschnitten gezeigte Darstellung eines Ausführungsbeispiels der erfindungsgemäßen Filtervorrichtung;
- Fig. 2: einen gegenüber Fig. 1 in größerem Maßstab und in perspektivischer Schrägansicht gezeichneten Teillängsschnitt lediglich des unteren Endbereichs der Filtervorrichtung;
- Fig. 3: einen im Maßstab von Fig. 2 und in perspektivischer Schrägansicht gezeichneten Teillängsschnitt lediglich des oberen Endbereichs des Ausführungsbeispiels der Filtervorrichtung;
- Fig. 4: einen gegenüber Fig. 3 vergrößert gezeichneten Teilausschnitt des in Fig. 3 mit IV bezeichneten Bereichs;
- Fig. 5: eine abgebrochen gezeichnete perspektivische Schrägansicht des Bereichs von Kragenteilen des Stützteils und der Festlegeeinrichtung der Vorrichtung; und
- Fig. 6 bis 8: der Fig. 5 entsprechende Ansichten, wobei verschiedene Bewegungsphasen der Festlegeeinrichtung beim Lösen der Verbindung zwischen den Kragenteilen dargestellt sind.

Mit Bezug auf die Zeichnungen ist die erfindungsgemäße Filtervorrichtung am Beispiel einer sog. In-Tank-Filtervorrichtung erläutert, die ein Filterelement 1 in einem verhältnismäßig dünnwandigen, kreiszylinderförmigen Filtergehäuse 25 aufnimmt, das am oberen Ende ein Flanschteil 27 besitzt, mit dem es an einer oberen Tanköffnung (nicht dargestellt) derart befestigt ist, dass sich das untere offene Ende 29 des Gehäuses 25 in den betreffenden Tank bis zu einer Höhe, die unter dem betrieblichen Fluidniveau liegt, erstreckt. Am oberen Ende ist das Gehäuse 25 mit einem mit dem Flanschteil 27 verschraubten Deckel 32 verschließbar. In geringem Abstand vom Flanschteil 27 mündet ein Zulaufrohr 31 über eine Einströmöffnung 33 in das Gehäuse 25.

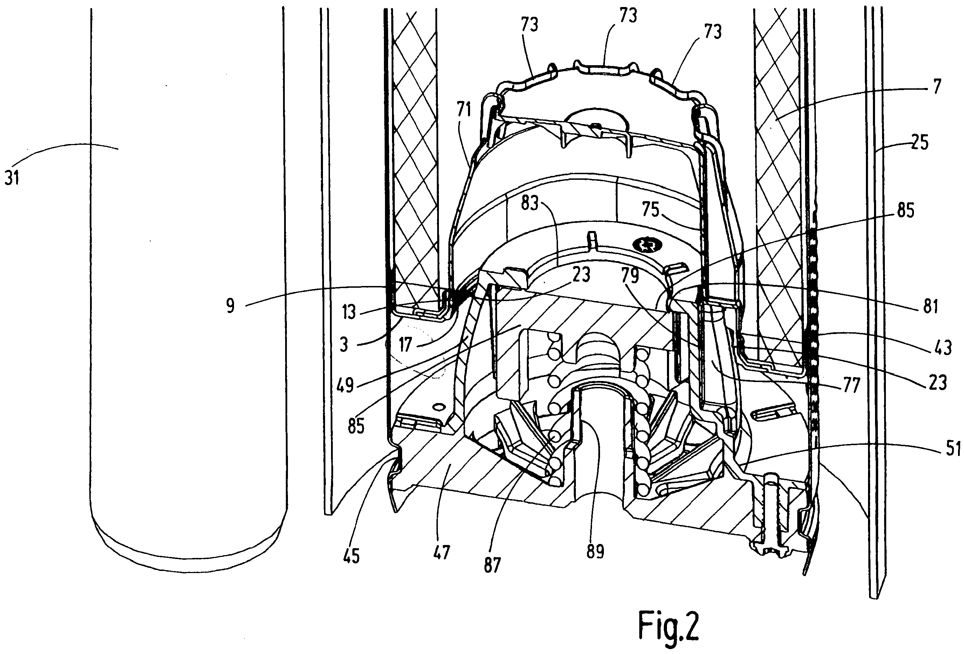

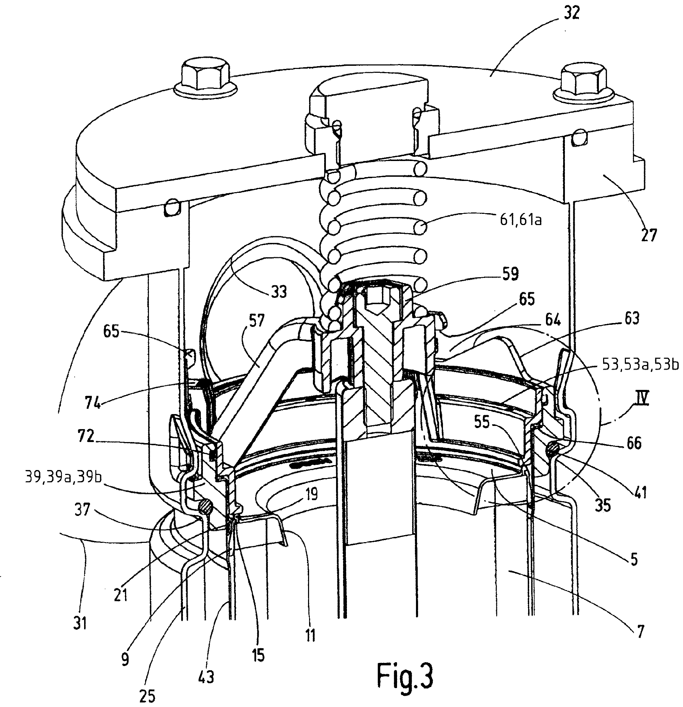

Wie den Fig. 2 und 3 deutlich entnehmbar ist, weist das Filterelement 1 eine untere Endkappe 3 und eine obere Endkappe 5 auf. Wie die Fig. 2 für die Endkappe 3 am deutlichsten zeigt, bilden die Endkappen 3, 5 die Einfassung für ein jeweiliges Ende eines einen Hohlzylinder bildenden Filtermaterials 7, bei vorliegendem Beispiel in Form eines gefalteten Mesh-Pack. Beide Endkappen 3 und 5 weisen einen kreisrunden Außenrand 9 auf, an dem beim gezeigten Beispiel die Außenseite des Filtermaterials 7 anliegt. Das Filtermaterial 7 muss jedoch nicht zwingend an einem Rand der Endkappen 3, 5 anliegen. Während die obere Endkappe 5 auch einen kreisrunden Innenrand 11 besitzt, weist die untere Endkappe 3 einen Innenrand 13 in Form eines Polygons, beim gezeigten Beispiel in Form eines Reuleaux-Dreiecks, auf. Durch den von der Kreisform abweichenden Anschlussbereich an der Endkappe 3 besteht die Möglichkeit, einen sog. Verbauschutz auszubilden, indem für den an der Filtervorrichtung für die Endkappe 3 vorgesehenen Anschlussbereich eine passende unrunde Geometrie vorgesehen ist und dadurch sichergestellt ist, dass die Fluid-Anschlussverbindung zwischen Filterelement und Filtervorrichtung nur herstellbar ist, wenn bei dem jeweils richtigen Filterelement 1 die geometrische Übereinstimmung an dem Anschlussbereich der Endkappe 3 gegeben ist.

Beide Endkappen 3 und 5 weisen jeweils eine umlaufende Dichtung 17 bzw. 15 auf, die aus einem elastischen Material an den die Endkappe 3, 5 bildenden starren Werkstoff angespritzt sind. Wie die Fig. 3 zeigt, ist bei der oberen Endkappe 5 die Dichtung 15 derart angespritzt, dass sie eine axiale Dichtfläche 19 bildet, die über eine Schrägfläche 21 in Richtung des Außenumfanges der oberen Endkappe 3 abfallend ausgeführt ist. Bei der unteren Endkappe 3 ist die Dichtung 17 derart angespritzt, dass zumindest eine radiale Dichtkante 23 gebildet ist. Wie den die Einbausituation des Filterelements 1 in die Filtervorrichtung zeigenden Fig. 2 und 3 entnehmbar ist, dienen die Dichtflächen 19 und 23 zur Bildung von Abdichtungen an den Festlegeteilen, mittels deren das Filterelement 1 in der erfindungsgemäßen Filtervorrichtung positionierbar ist.

Unterhalb der Einströmöffnung 33 ist in der Wand des Filtergehäuses 25 eine Einbördelung 35 ausgebildet, die derart geformt ist, dass an einem radial eingezogenen Bereich eine Art Stufe oder Flanke 37 gebildet ist (Fig. 3), an der ein Kragenteil 39a des Stützteils 39 der Vorrichtung, das die Form eines gestuften Ringkörpers 39b besitzt, über eine Dichtung 41 gegen eine Axialbewegung nach unten abgestützt ist. Der gestufte Ringkörper 39b, der das Kragenteil 39a des Stützteils 39 der Vorrichtung bildet, ist, wie die Fig. 3 zeigt, mit einem perforierten Stützrohr 43 des Stützteils 39 verbunden. Das Stützrohr 43, an dem die Außenseite des Filtermaterials 7 des Filterelements 1 anliegt, erstreckt sich bis zum unteren offenen Ende des Filtergehäuses 25. Wie Fig. 2 zeigt, ist am unteren Ende des Stützrohres 43 eine Einbördelung 45 vorgesehen, mittels deren ein starres Bodenteil 47 mit dem Stützrohr 43 verbunden ist. Mit dem Ringkörper 39b und dem Bodenteil 47 bildet das Stützrohr 43 als Bestandteil des Stützteils 39 somit eine Art Innengehäuse für das von oben her einschiebbare Filterelement 1. Beim Einschieben des Filterelements 1, d.h., wenn es aus der in Fig. 2 gezeigten, teilweise eingeschobenen Position axial nach unten bewegt wird, bildet das Bodenteil 47 zusammen mit einem mit ihm verbundenen Bypass-Ventilgehäuse 49 ein unteres Festlegeteil für die untere Endkappe des Filterelements 1.

Wie bereits angedeutet, hat zur Bildung einer Art Schlüssel/Schloss-System der Außenumfang des Bypass-Ventilgehäuses 49 im Anlage- oder Abdichtbereich 51 eine Polygonform, die dem Reuleaux-Dreieck am Innenrand 13 der Endkappe 3 entspricht, s. Fig. 2. Bei fehlender Übereinstimmung der Polygonformen von Innenrand 13 der Endkappe 3 und Außenumfang des den Abdichtbereich 51 bildenden Bypass-Ventilgehäuses 49 als dem unteren Festlegeteil der Filtervorrichtung ist ein Verbringen des Filterelements 1 in die eingefahrene Funktionsposition verhindert, so dass ein effektiver Verbauschutz gebildet ist, der die Inbetriebnahme eines unpassenden, für den Einsatzzweck ungeeigneten Filterelements 1 verhindert.

Als weiteres Kragenteil 53a, das der Festlegeeinrichtung 53 zugehörig ist, mittels deren das Filterelement 1 in der eingebauten Funktionsposition am unteren Festlegeteil, also dem Bodenteil 47 mit Bypass-Ventilgehäuse 49, gehalten ist, ist ein in den gestuften Innenumfang des das Kragenteil 39a des Stützteils 39 bildenden Ringkörpers 39b eingreifender Haltering 53b vorgesehen, der eine der Innenseite des Ringkörpers 39b entsprechend gestufte Form besitzt und mit seinem inneren, unteren Endrand 55 an der Dichtfläche 19 der Endkappe 5 in seiner Funktionsstellung anliegt. Von der Innenseite des Halteringes 53b erstrecken sich einstückige Stege 57 in Radialrichtung nach innen und geneigt nach oben zu einem zentral gelegenen Federlager 59 hin, an dem sich ein Energiespeicher 61 in Form einer Druckfeder 61a abstützt, deren anderes Ende am Gehäusedeckel 32 anliegt und so den Haltering 53b axial nach unten vorspannt und die Dichtkraft erzeugt, mit der der Endrand 55 an der Dichtfläche 19 der Endkappe 5 anliegt.

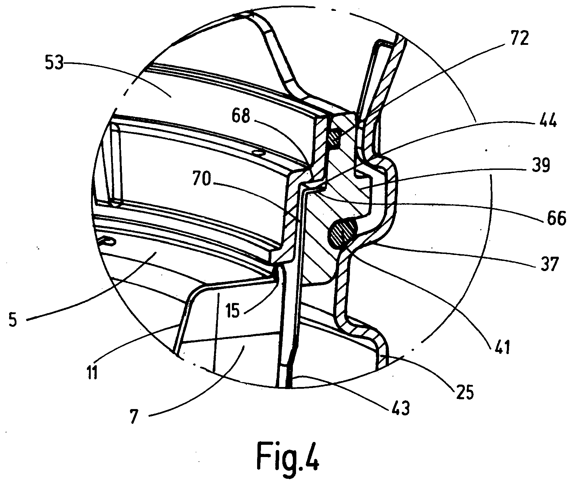

Wie erwähnt, bildet das Stützrohr 43 in Verbindung mit dem mit ihm am unteren Ende durch die Verbördelung 45 verbundenen Bodenteil 47 ein Innengehäuse für das Filterelement 1, wobei das Bodenteil 47 ein Festlegeteil für das Filterteil bildet. Das obere Ende des Stützrohres 43 weist, wie am besten aus Fig. 4 entnehmbar ist, einen nach außen abgewinkelten Rand 44 auf, der auf einer Stufe 66 an der Innenseite des Ringkörpers 39b als Kragenteil 39a des Stützteils 39 aufliegt. Dadurch ist das mit dem Stützrohr 43 gebildete Innengehäuse gegen die von der Druckfeder 61a erzeugte Dichtkraft, die vom Endrand 55 des Halterings 53b auf die obere Endkappe 5 und über das Filterelement 1 auf die untere Endkappe 3 und von dieser wiederum auf das Bodenteil 47 als unteres Festlegeteil übertragen wird, am Ringkörper 39b abgestützt, wodurch dieser wiederum über den Dichtring 41 an der eingezogenen Flanke 37 des Filtergehäuses 25 abdichtend festgelegt ist. Um eine ungehinderte Übertragung der Dichtkraft von dem Haltering 53b als Kragenteil 53a der Festlegeeinrichtung 53 auf die obere Endkappe 5 sicherzustellen, sind die Abmessungen von Haltering 53b und Ringkörper 39b als Kragenteil 39a des Stützteils 39, ebenso wie die Lage der daran gebildeten Stufen 66, 68, derart gewählt, dass bei dem Einbauzustand, wie in Fig. 4 am deutlichsten gezeigt, zwischen der Stufe 66 am Ringkörper 39b und der gegenüberliegenden Stufe 68 am Haltering 53b ein axiales Spiel als Freiraum für eine relative Axialbewegung zur Verfügung steht. Ebenso befindet sich in dem sich an die Stufen 66 und 68 axial nach unten anschließenden Bereich ein Radialspiel 70 zwischen Ringkörper 39b und Haltering 53b. Lediglich in dem sich an die Stufen 66, 68 nach oben anschließenden Bereich ist zwischen Ringkörper 39b und Haltering 53b eine passende Führung gebildet, an der ein Dichtring 72 den Abdichtbereich bildet. Dadurch wirkt die von der Druckfeder 61a erzeugte Dichtkraft über das Filterelement 1 als Axialkraft, die vom oberen Rand 44 des Stützrohres 43 auf den Ringkörper 39b und über diesen wiederum auf den Dichtring 41 übertragen wird, der an der Flanke 37 des Gehäuses 25 anliegt.

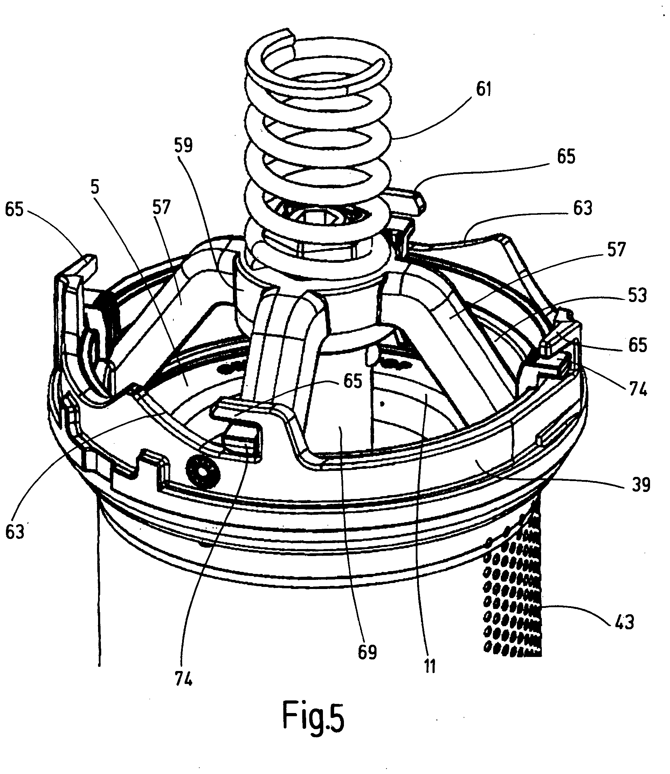

Wie am deutlichsten aus den Fig. 5 bis 8 ersichtlich ist, sind am oberen Umfangsrand des Ringkörpers 39b mehrere Nockenbahnen 63 vorgesehen, an die sich jeweils ein Rasthaken 65 anschließt, die sich oberhalb des Endes der zugehörigen Nockenbahn 63 in Umfangsrichtung erstrecken. Zur Zusammenwirkung mit diesen Rasthaken 65 sind am das Kragenteil 53a der Festlegeeinrichtung 53 bildenden Haltering 53b an dessen oberem Rand vorgesehene, radial nach außen vorspringende Rastriegel 74 vorgesehen. Die Fig. 5 zeigt den Einbauzustand, bei dem die von der Druckfeder 61a erzeugte Dichtkraft wirksam ist. Hierbei befinden sich die Rastriegel 74 an der tiefsten Stelle der Nockenbahnen 63 unterhalb der Haken 65, wobei jedoch zwischen Rastriegel 74 und der jeweiligen Nockenbahn 63 ein axiales Spiel verbleibt, so dass die Federkraft der Druckfeder 61a nicht von den Rastriegeln 74 auf den Haltering 53b wirkt, der in Axialrichtung an der Flanke 67 des Gehäuses 25 festgelegt ist, sondern ungehindert am Ringkörper 39b wirkt, der vom Haltering 53b hinsichtlich Axialbewegungen durch das zwischen den Stufen 66 und 68 vorhandene Spiel entkoppelt ist.

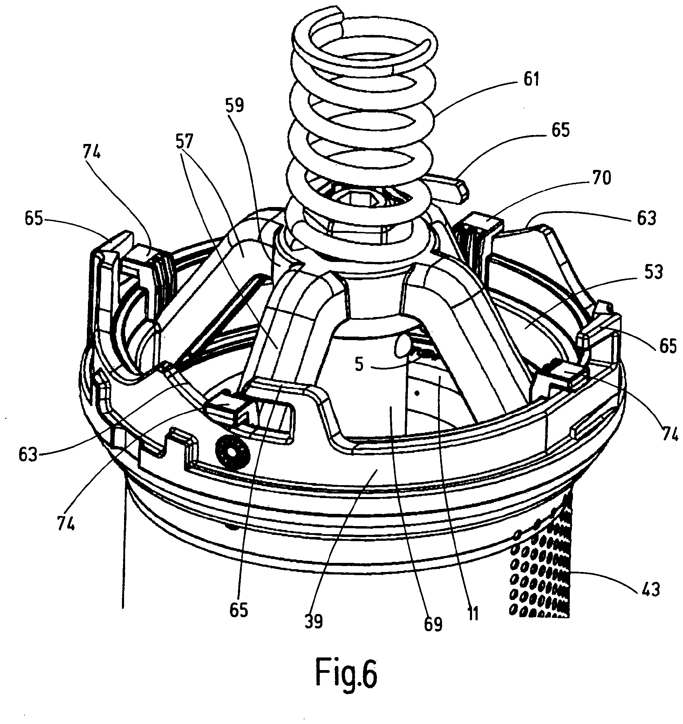

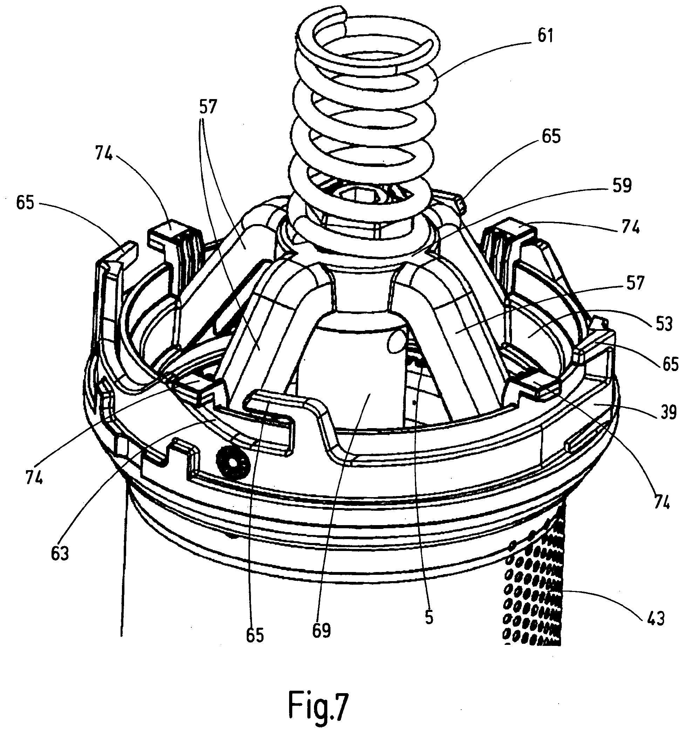

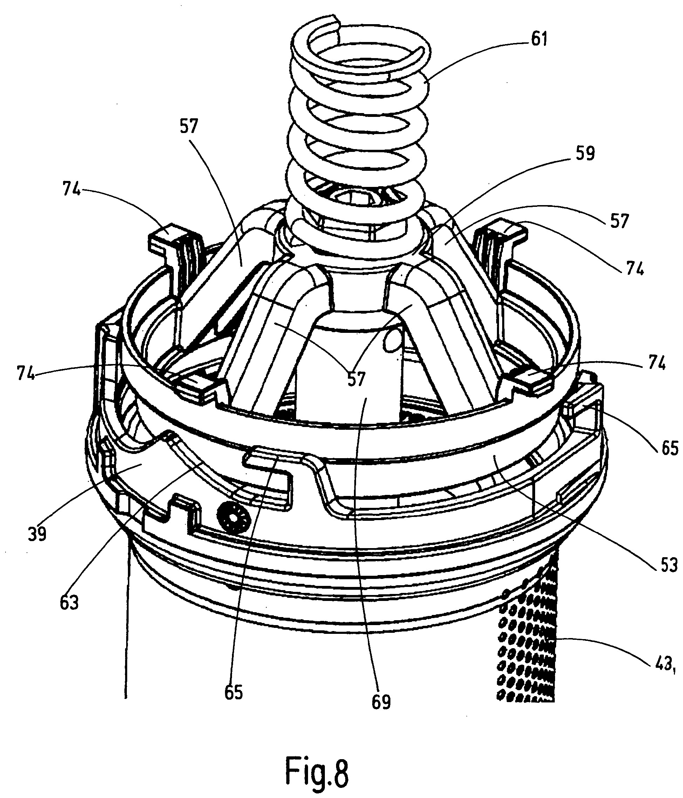

Wird der Gehäusedeckel 32 gelöst, entspannt sich die Druckfeder 61a, so dass die Festlegeeinrichtung 53 spannungsfrei abgenommen werden kann, um beispielsweise das Filterelement 1 für den Austausch aus dem Innengehäuse des Stützteils 39 herauszunehmen. Damit das Stützteil 39, also das Innengehäuse mit Stützrohr 43 und mit dem sein Kragenteil 39a bildenden Ringkörper 39b im Gehäuse 25 verbleibt, sind Haltering 53b und Ringkörper 39b axial auseinander zu bewegen. Dies kann auf bequeme Weise bewirkt werden, indem die Rastriegel 74 durch eine im Uhrzeigersinn erfolgende Drehbewegung der Stege 57 mit dem Haltering 53b im Uhrzeigersinn verdreht werden, wobei die Rastriegel entlang der Nockenbahnen 63 zwangsgeführt axial nach oben bewegt werden und eine axiale Relativbewegung zwischen Haltering 53b und Ringkörper 39b stattfindet. Die Drehbewegung ist außerdem auch möglich unter Zuhilfenahme eines Werkzeuges, wie einer Ratsche, das an einem Sechskant angreift, an dem auch die Druckfeder 61a angelenkt ist. Die aufeinanderfolgenden Bewegungsphasen dieser Drehbewegung sind in Fig. 6 und 7 gezeigt. Auf bequeme Weise wird dadurch eine gegebenenfalls wirkende Reibkraft zwischen diesen Kragenteilen 39a, 53a in dem mittels der Dichtung 72 abgedichteten Führungsbereich überwunden. In Zusammenwirkung mit den Nockenbahnen 63 und den Rastriegeln 74 ist dadurch eine Ausbauhilfe für das Filterelement 1 gebildet. In bequemer Weise kann dadurch, (siehe Fig. 8), die gesamte Festlegeeinrichtung 53 zusammen mit einem Permanentmagnetstab 69 herausgenommen werden, der am Federlager 59 angebracht ist und sich von dort in Axialrichtung ins Innere des Filterelements 1 erstreckt.

Wie am deutlichsten der Fig. 2 entnehmbar ist, weist die untere Endkappe 3 von dem polygonförmig verlaufenden Innenrand 13 ausgehend einen Innenkörper in Form eines Doms 71 auf, der sich axial in den inneren Filterhohlraum erstreckt und an seinem oberen Ende einen Kranz von Fluid-Durchtrittsstellen 73 aufweist. An der Innenseite bildet der Dom 71 durch einen eingezogenen Wandbereich eine sich in Axialrichtung erstreckende Leiste 75. Das Bypass-Ventilgehäuse 49, das sich bei der eingeschobenen Funktionsposition des Filterelements 1 in den Dom 71 erstreckt, hat eine der Innenform des Doms 71 entsprechende Außenform und weist an der Außenseite eine nutartige Wandvertiefung 77 auf, die, siehe Figur 2, eine Gleitfläche 79 bildet, entlang der die Leiste 75 des Doms 71 geführt ist, wenn das Filterelement 1 aus der in Figur 2 gezeigten Anfangsposition nach unten in die Funktionsposition eingeschoben wird. Die Leiste 75 bildet daher in Zusammenwirkung mit der Gleitfläche 79 an der Vertiefung 77 des Bypass-Ventilgehäuses 49 eine Drehpositionierung, welche das Polygon am Innenrand 13 der Endkappe 3 in Kongruenz zur Polygonform am Abdichtbereich 51 des Bypass-Ventilgehäuses 49 ausrichtet. Letzteres bildet am Innenrand 81 einer oberen Gehäuseöffnung 83 einen Ventilsitz für die Anlage eines Ventilkörpers 85 des Bypassventils. Der Ventilkörper 85 ist durch eine Ventilfeder 87 vorgespannt, die auf einem am Bodenteil 47 befindlichen Stutzen 89 sitzt. Ferner bildet die Außenwand des Ventilgehäuses 49 den Dichtsitz bei eingebautem Filterelement 1 mit dem unteren Dichtring 17 mit umlaufender Dichtkante 23 der unteren Endkappe 3 aus.

Beim Filtrierbetrieb des Filterelements 1 in der gezeigten In-Tank-Filtervorrichtung strömt das Fluid über die Einströmöffnung 33 an der Vorderseite des Filterelements 1 ein und gelangt über die Öffnung am Innenrand 11 der Endkappe 5 in den die Roh- oder Unfiltratseite bildenden, inneren Filterhohlraum. Nach Durchströmen des Filtermaterials 7 von innen nach außen zur Rein- oder Filtratseite im Raum zwischen dem Stützrohr 43 und der Gehäusewand 25 tritt das Filtrat am offenen, unteren Ende des Gehäuses 25 in den Tank aus. Es versteht sich, dass das Filterelement 1 nicht nur bei einer In-Tank-Filtervorrichtung vorteilhaft anwendbar ist, sondern bei Filtervorrichtungen jeglicher Art, bei denen korrespondierende Festlegeteile für Anschlüsse mit Endkappen vorgesehen sind, die am Filterelement eine spezielle unrunde Formgebung besitzen.

Während vorliegend ein Reuleaux-Polygon gezeigt ist, bei dem sich die Polygonform an der unteren Endkappe 3 befindet und der Anschlussbereich der oberen Endkappe 5 kreiszylindrisch ist, könnten beide Endkappen 3 und 5 mit einer Polygonform versehen sein, die voneinander unterschiedlich ist, oder es könnte die untere Endkappe 3 eine kreiszylindrische Anschlussgeometrie besitzen, während die Polygonform an der oberen Endkappe 5 vorgesehen ist. Anders als beim vorliegenden Beispiel könnte die polygonförmige Anschlussgeometrie nicht am Innenrand 13 an der Endkappe 3 vorgesehen sein, sondern könnte an einem Außenrand einer oder beider Endkappen oder auch bei einer Endkappe am Innenrand und bei der jeweils anderen Endkappe an ihrem Außenrand vorgesehen sein. Ferner könnten Endkappen mit charakteristischen, voneinander abweichenden Mehreckform eingesetzt werden.

## Patentansprüche

1. Filtervorrichtung, mit einem Stützteil (39) und einem darin aufnehmbaren Filterteil (1), mit mindestens einer zwischen Stütz- (39) und Filterteil (1) wirkenden Dichteinrichtung (15, 17) sowie mit einer Festlegeeinrichtung (53) zum wiederlösbaren Verbinden von Stütz-(39) mit Filterteil (1), die ein umlaufendes Kragenteil (53a) aufweist und die unter der Wirkung mindestens eines Energiespeichers (61) auf die Dichteinrichtung (15, 17) eine Kraft ausübt, die Stütz- (39) und Filterteil (1) fluiddicht gegeneinander abdichtet, wobei das Stützteil (39) mit einem Dichtsystem (41, 72) versehen ist und zumindest an seinem der Festlegeeinrichtung (53) zugewandten Endbereich ein weiteres umlaufendes Kragenteil (39a) aufweist, **dadurch gekennzeichnet, dass** das Kragenteil (53a) der Festlegeeinrichtung (53) konzentrisch innerhalb des Kragenteils (39a) des Stützteils (39) geführt ist.

2. Filtervorrichtung nach Anspruch 1, **dadurch gekennzeichnet, dass** in deren filterndem Betriebszustand unter Wirkung des Energiespeichers (61) das Kragenteil (53a) der Festlegeeinrichtung (53) mit vorgebbarer Dichtkraft gegen ein Dichtelement (15) der benachbart angeordneten einen Endkappe (5) des Filterteils (1) gelegt ist.

3. Filtervorrichtung nach Anspruch 1 oder 2, **dadurch gekennzeichnet, dass** diese derart ausgebildet ist, dass die eine Endkappe (5) über das Filtermedium (7) die weitere Endkappe (3) des Filterteils (1) unter der Wirkung des Energiespeichers (61) gegen die zwischen Stütz- (39) und Filterteil (1) wirkende Dichteinrichtung (17) bei Erhöhung der Dichtkraftwirkung bewegt.

4. Filtervorrichtung nach einem der vorstehenden Ansprüche, **dadurch gekennzeichnet, dass** über die Dichteinrichtung (17) zwischen Filter-(1) und Stützteil (39) die Wirkung des Energiespeichers (61) der Festlegeeinrichtung (53) auf das Kragenteil (39a) des Stützteils (39) übertragen ist, das sich zumindest mit Teilen (41) seines Dichtsystems (41, 72) bei erhöhter Dichtkraftwirkung an Gehäuseteilen (37) eines Aufnahmegehäuses (25) für das Stütz- (39) und das Filterteil (1) nebst der Festlegeeinrichtung (53) anlegt.

5. Filtervorrichtung nach einem der vorstehenden Ansprüche, **dadurch gekennzeichnet, dass** die zwischen Stütz- (39) und Filterteil (1) wirkende Dichteinrichtung (17) an der weiteren Endkappe (3) des Filterteils (1) angeordnet, insbesondere angespritzt ist, die auf eine benachbart angeordnete Endkappe (71) des Stützteils (39) unter der Wirkung des Energiespeichers (61) der Festlegeeinrichtung (53) drückt.

6. Filtervorrichtung nach einem der vorstehenden Ansprüche, **dadurch gekennzeichnet, dass** das Kragenteil (39a) des Stützteils (39) gestuft ausgebildet ist und dass an einer Stufe (66) dieses Kragenteils (39a) das umgelegte, insbesondere umgebördelte Ende (44) eines perforierten Stützrohres (43) des Stützteils (39) anliegt.

7. Filtervorrichtung nach einem der vorstehenden Ansprüche, **dadurch gekennzeichnet, dass** das Kragenteil (39a) des Stützteils (39) innenumfangsseitig mit einer weiteren Dichteinrichtung (72) als Teil des Dichtsystems (41, 72) versehen ist, an die sich das entsprechend zu dem Kragenteil (39a) des Stützteils (39) gestufte Kragenteil (53a) der Festlegeeinrichtung (53) in abdichtender Weise anlegt.

8. Filtervorrichtung nach einem der vorstehenden Ansprüche, **dadurch gekennzeichnet, dass** diese derart ausgebildet ist, dass in deren filterndem Betriebszustand und bei abdichtender Wirkung aller Dichteinrichtungen (15, 17, 41, 72) in axialer Richtung parallel zur Längsachse der Filtervorrichtung gesehen es im Wesentlichen zu einer nahezu kräftefreien Anlage zwischen den jeweils korrespondierend gestuften Innenwandflächen (66, 68) der beiden konzentrisch ineinander geführten Kragenteile (39a, 53a) kommt.

9. Filtervorrichtung nach einem der vorstehenden Ansprüche, **dadurch gekennzeichnet, dass** das Kragenteil (53a) der Festlegeeinrichtung (53) über seinen oberen Rand vorspringende und nach außen weisende Rastriegel (74) aufweist, die bei Verdrehung der Festlegeeinrichtung (53) gegenüber dem Stützteil (39) in seitlichen Eingriff mit zuordenbaren Rasthaken (65) des anderen Kragenteils (39a) bringbar sind, deren axiale Ausdehnung derart bemessen ist, dass die in Eingriff mit den Rasthaken (65) befindlichen Rastriegel (74) anlagefrei geführt unter der Einwirkung des Energiespeichers (61) eine axiale, kraftübertragende Zustellbewegung auf die Dichteinrichtung (15) der einen oberen Endkappe (5) des Filterteils (1) ausführen.

10. Filtervorrichtung nach einem der vorstehenden Ansprüche, **dadurch gekennzeichnet, dass** das Kragenteil (39a) des Stützteils (39) zumindest teilweise benachbart zu der freien Öffnung der Rasthaken (65) einen Steuernocken (63) aufweist, der mit einem rampenartigen Anstieg versehen das Außereingriffbringen von Filterteil (1) und Stützteil (39) erleichtert.

11. Tankvorrichtung mit einem rohrförmigen Gehäuseteil (25), in das eine Filtervorrichtung gemäß der Merkmalsausgestaltung nach einem der vorstehenden Ansprüche über eine Gehäuseöffnung eingesetzt ist, die mittels eines Tankdeckels (32) verschließbar ist, der auf eine Druckfeder (61a) einer Festlegeeinrichtung (53) der Filtervorrichtung derart eine Kraft ausübt, dass die Filtervorrichtung in abdichtender Weise im rohrförmigen Gehäuseteil (25) aufgenommen ist.

## Claims

1. Filter device, having a supporting part (39) and a filter part (1) which can be accommodated therein, with at least one sealing device (15, 17) which acts between the supporting part (39) and the filter part (1), and having a fixing device (53) for releasably connecting the supporting part (39) to the filter part (1), which fixing device has a circumferential collar part (53a) and, under the action of at least one energy accumulator (61), exerts on the sealing device (15, 17) a force which seals the supporting part (39) and the filter part (1) off from each other in a fluid-tight manner, wherein the supporting part (39) is provided with a sealing system (41, 72) and has a further circumferential collar part (39a) at least on its end region directed towards the fixing device (53), **characterised in that** the collar part (53a) of the fixing device (53) is concentrically guided inside the collar part (39a) of the supporting part (39).

2. Filter device according to claim 1, **characterised in that**, in its filtering operating state under the action of the energy accumulator (61), the collar part (53a) of the fixing device (53) is placed with predefinable sealing force against a sealing element (15) of the adjacently arranged one end cap (5) of the filter part (1).

3. Filter device according to claim 1 or 2, **characterised in that** it is configured in such a manner that the one end cap (5) moves the further end cap (3) of the filter part (1) via the filter medium (7) under the action of the energy accumulator (61) against the sealing device (17) acting between the supporting part (39) and the filter part (1) when the sealing force effect is increased.

4. Filter device according to one of the preceding claims, **characterised in that** the action of the energy accumulator (61) of the fixing device (53) is transmitted to the collar part (39a) of the supporting part (39) via the sealing device (17) between the filter part (1) and the supporting part (39), the supporting part bearing at least with parts (41) of its sealing system (41, 72) with increased sealing force effect against housing parts (37) of a receiving housing (25) for the supporting part (39) and the filter part (1) together with the fixing device (53).

5. Filter device according to one of the preceding claims, **characterised in that** the sealing device (17) acting between the supporting part (39) and the filter part (1) is arranged, in particular injection moulded, on the further end cap (3) of the filter part (1), which presses onto an adjacently arranged end cap (71) of the supporting part (39) under the action of the energy accumulator (61) of the fixing device (53).

6. Filter device according to one of the preceding claims, **characterised in that** the collar part (39a) of the supporting part (39) is configured to be stepped and **in that** the folded-over, in particular flanged end (44) of a perforated supporting tube (43) of the supporting part (39) bears against a step (66) of this collar part (39a).

7. Filter device according to one of the preceding claims, **characterised in that** the collar part (39a) of the supporting part (39) is provided on the inner circumference with a further sealing device (72) as part of the of sealing system (41, 72) against which the collar part (53a) of the fixing device (53), which is stepped correspondingly to the collar part (39a) of the supporting part (39), bears in a sealing manner.

8. Filter device according to one of the preceding claims, **characterised in that** it is configured in such a manner that, in its filtering operating state and with the sealing action of all sealing devices (15, 17, 41, 72), viewed in the axial direction parallel to the longitudinal axis of the filter device, there is substantially almost force-free contact between the respective correspondingly stepped inner wall surfaces (66, 68) of the two collar parts (39a, 53a) guided concentrically one inside the other.

9. Filter device according to one of the preceding claims, **characterised in that** the collar part (53a) of the fixing device (53) has locking latches (74) which protrude beyond its upper edge, point outwards and, when the fixing device (53) is twisted with respect to the supporting part (39), can be brought into lateral engagement with associated locking hooks (65) of the other collar part (39a), the axial extension of the locking hooks being dimensioned in such a manner that the locking latches (74), which are in engagement with the locking hooks (65), are guided without contact and execute an axial, force-transmitting feed movement to the sealing device (15) of the upper end cap (5) of the filter part (1) under the action of the energy accumulator (61).

10. Filter device according to one of the preceding claims, **characterised in that** the collar part (39a) of the supporting part (39) has, at least partially adjacent to the unobstructed opening of the locking hooks (65), a control cam (63) which, provided with a ramp-like slope, facilitates the disengagement of the filter part (1) and the supporting part (39).

11. Tank device having a tubular housing part (25), into which a filter device in accordance with the feature configuration according to one of the preceding claims is inserted via a housing opening which can be closed by means of a tank cover (32) that exerts a force on a compression spring (61a) of a fixing device (53) of the filter device in such a manner that the filter device is accommodated in the tubular housing part (25) in a sealing manner.

## Revendications

1. Installation de filtration, comprenant une partie (39) d'appui et une partie (1) de filtre pouvant y être reçue, comprenant au moins un dispositif (15, 17) d'étanchéité agissant entre la partie (39) d'appui et la partie (1) de filtre, ainsi que comprenant un dispositif (53) de fixation pour la liaison pouvant être redéfaite de la pièce (39) d'appui à la pièce (1) de filtre, dispositif qui a une partie (53a) de collet faisant le tour et qui, sous l'effet d'au moins un accumulateur (61) d'énergie, applique une force au dispositif (15, 17) d'étanchéité, rend étanche l'une par rapport à l'autre d'une manière étanche aux fluides la partie (39) d'appui et la partie de filtre, dans laquelle la partie (39) d'appui est pourvue d'un système (41, 72) d'étanchéité et a au moins sur sa région d'extrémité tournée vers le dispositif (53) de fixation, une autre partie (39a) de collet faisant le tour,
**caractérisée**
**en ce que** la partie (53a) de collet du dispositif (53) de fixation est guidée concentriquement à l'intérieur de la partie (39a) de collet de la partie (39) d'appui.

2. Installation de filtration suivant la revendication 1, **caractérisée en ce que**, dans son état de fonctionnement en filtration, la partie (53a) de collet du dispositif (53) de fixation s'applique, sous l'effet de l'accumulateur (61) d'énergie, avec une force d'étanchéité pouvant être donnée à l'avance à un élément (15) d'étanchéité de la coiffe (5) d'extrémité, disposée au voisinage, de la partie (1) de filtre.

3. Installation de filtration suivant la revendication 1 ou 2, **caractérisée en ce qu'**elle est constituée de manière à ce que la une coiffe (5) d'extrémité déplace par le milieu (7) filtrant l'autre coiffe (3) d'extrémité de la partie (1) de filtre sous l'effet de l'accumulateur (61) d'énergie vers le dispositif (17) d'étanchéité agissant entre la pièce (39) d'appui et la partie (1) de filtre en augmentant l'effet de la force d'étanchéité.

4. Installation de filtration suivant l'une des revendications précédentes, **caractérisée en ce que**, par le dispositif (17) d'étanchéité entre la partie (1) de filtre et la partie (39) d'appui, l'effet de l'accumulateur (61) d'énergie du dispositif (3) de fixation est transmis à la partie (39a) de collet de la partie (39) d'appui qui s'applique, au moins par les parties (41) de son système (41, 72) d'étanchéité, en augmentant l'effet de la force d'étanchéité, à des parties (37) d'une enveloppe (25) de réception de la partie (39) d'appui et de la partie (1) de filtre outre au dispositif (53) de fixation.

5. Installation de filtration suivant l'une des revendications précédentes, **caractérisée en ce que** le dispositif (17) d'étanchéité agissant entre la partie (39) d'appui et la partie (1) de filtre est disposé, en étant notamment injecté, sur l'autre coiffe (3) d'extrémité de la partie (1) de filtre, dispositif qui pousse une coiffe (71) d'extrémité disposée au voisinage de la partie (39) d'appui sous l'effet de l'accumulateur (61) d'énergie du dispositif (53) de fixation.

6. Installation de filtration suivant l'une des revendications précédentes, **caractérisée en ce que** la partie (39a) de collet de la partie (39) d'appui est constituée en palier et **en ce que** l'extrémité (44) repliée, notamment rabattue, d'un tuyau (43) d'appui perforé de la partie (39) d'appui s'applique à un palier (70) de la partie (39a) de collet.

7. Installation de filtration suivant l'une des revendications précédentes, **caractérisée en ce que** la partie (39a) de collet de la partie (39) d'appui est pourvue du côté du pourtour intérieur d'un autre dispositif (72) d'étanchéité comme partie du système (41, 72) d'étanchéité, sur lequel la partie (53a) de collet en palier, correspondant à la partie (39a) de collet de la partie (39) d'appui, du dispositif (53) de fixation s'applique d'une façon donnant de l'étanchéité.

8. Installation de filtration suivant l'une des revendications précédentes, **caractérisée en ce que** celle-ci est constituée de manière à ce que, dans son état de fonctionnement en filtration et alors que tous les dispositifs (15, 17, 41, 72) d'étanchéité ont un effet d'étanchéité, considéré dans la direction axiale parallèlement à l'axe longitudinal de l'installation de filtration, il se produit sensiblement un contact presque sans force entre les surfaces (66, 68) de paroi intérieure en palier correspondant respectivement des deux parties (39a, 53a) de collet guidées l'une dans l'autre concentriquement.

9. Installation de filtration suivant l'une des revendications précédentes, **caractérisée en ce que** la partie (53a) de collet du dispositif (53) de fixation a des verrous (74) d'encliquetage, qui font saillie de son bord supérieur, qui sont tournés vers l'extérieur et qui, lorsque le dispositif (53) de fixation tourne par rapport à la partie (39) d'appui, peuvent être mis en prise latérale avec des crochets (65) d'encliquetage, pouvant être associés, de l'autre partie (39a) de collet, dont l'étendue axiale est telle que les verrous (74) d'encliquetage se trouvant en prise avec les crochets (65) d'encliquetage guidés sans contact sous l'effet de l'accumulateur (61) d'énergie exécutent un mouvement d'avance axiale avec transmission de force au dispositif (15) d'étanchéité de la une coiffe (5) d'extrémité supérieure de la partie (1) de filtre.

10. Installation de filtration suivant l'une des revendications précédentes, **caractérisée en ce que** la partie (39a) de collet de la partie (39) d'appui a au moins en partie au voisinage de l'ouverture libre, des crochets (65) d'encliquetage, qui, pourvus d'une montée de type en rampe, facilitent la mise hors de prise de la partie (1) de filtre et de la partie (39) d'appui.

11. Système de réservoir, ayant une partie (25) d'enveloppe tubulaire, dans laquelle est insérée par une ouverture de l'enveloppe une installation de filtration selon la configuration de caractéristiques suivant l'une des revendications précédentes, ouverture qui peut être fermée au moyen d'un couvercle (32) de réservoir, qui applique à un ressort (61) de compression d'un dispositif (53) de fixation de l'installation de filtration une force de manière à ce que l'installation de filtration soit reçue d'une façon étanche dans la partie (25) d'enveloppe tubulaire.
